# FASCICULE DE BREVET EUROPEEN

(11) **EP 3 394 740 B1**
(45) Date de publication et mention de la délivrance du brevet: **28.06.2023**
(21) Numéro de dépôt: 16829284.5
(22) Date de dépôt: 23.12.2016
(51) Int. Cl.: G06F 9/4401, G06F 9/445, H04L 67/00, G06F 21/44, H04L 9/40

(54) **PROCEDE DE CONFIGURATION D'UN SYSTEME D'EXPLOITATION**
VERFAHREN ZUR KONFIGURATION EINES BETRIEBSSYSTEMS
METHOD FOR CONFIGURING AN OPERATING SYSTEM

(30) Priorité: 24.12.2015 FR 1563334
(43) Date de publication de la demande: 31.10.2018
(73) Titulaire: Bull SAS, 78340 Les Clayes-sous-Bois (FR)
(72) Inventeur: BOZGA, Liana, 38240 Meylan (FR); WELTERLEN, Benoït, 38000 Grenoble (FR); BESSON, Christophe, 38000 Grenoble (FR)
(74) Mandataire: Plasseraud IP
(86) Numéro de dépôt international: PCT/FR2016/053659
(87) Numéro de publication internationale: WO 2017/109435

(56) Documents cités:
- EP-A1- 1 482 407
- US-A1- 2003 126 242
- US-A1- 2010 058 042
- US-B1- 7 788 477
- US-B1- 9 191 275

## Description

### DOMAINE DE L'INVENTION

L'invention concerne le domaine des procédés de configuration d'un système d'exploitation sur un ordinateur client, comme un noeud de calcul ou comme un client léger, d'un groupe de plusieurs ordinateurs clients dans un réseau comprenant aussi un serveur central. Le reste du texte s'applique aux noeuds de calcul, sauf mention contraire, mais il pourrait de façon similaire s'appliquer aux clients légers.

### CONTEXTE DE L'INVENTION

Lors de la configuration des noeuds de calcul, afin de ne pas stocker localement sur chaque noeud de calcul le système d'exploitation ou système racine, ces noeuds de calcul démarrent sur un système racine distant qui est partagé entre les noeuds de calcul. Ce système d'exploitation étant partagé, il est identique pour tous les noeuds. Or, il serait intéressant de pouvoir apporter une configuration différente à chacun des noeuds et de pouvoir identifier un noeud de calcul parmi d'autres sur le réseau, de préférence de façon sécurisée.

Selon un art antérieur, les techniques habituellement utilisées pour démarrer des machines sans espace racine local sont de type NFS (« Network File System » en langue anglaise), permettant l'accès à l'espace racine en mode fichier, ou iSCSI (« internet Small Computer System Interface » en langue anglaise), permettant l'accès à l'espace racine en mode bloc, dans lesquelles chaque machine ou chaque noeud de calcul a son espace dédié au niveau du serveur central. Ce qui entraîne une utilisation importante d'espace mémoire disponible ainsi que d'espace disque, alors que beaucoup de données sont dupliquées à l'identique.

Des exemples et des modes de réalisation selon l'art antérieur peuvent être trouvés dans EP 1 482 407 A1, US 2003/126242 A1, US 7 788 477 B1, US 2010/058042 A1 et US 9 191 275 B1.

### RESUME DE L'INVENTION

Le but de la présente invention est de fournir un procédé de configuration du système d'exploitation palliant au moins partiellement les inconvénients précités.

Plus particulièrement, l'invention vise à fournir un procédé de configuration du système d'exploitation, permettant à la fois un gain de place au niveau du stockage et une personnalisation poussée de la configuration pour chaque noeud de calcul.

Pour cela, l'invention propose de dissocier les données du système d'exploitation en d'une part des données communes qui sont stockées sur le serveur central dans un espace commun et d'autre part des données de configuration spécifiques à chaque noeud de calcul qui seront stockées localement au niveau de chaque noeud de calcul de préférence après avoir été téléchargées du serveur central.

Pour chaque noeud de calcul, le système d'exploitation personnalisé qu'il voit est la combinaison des données de configuration spécifiques qu'il stocke, avec les données communes, ou avec une partie des données communes, qui sont stockées sur le serveur central.

Ainsi, la taille de la mémoire requise reste comparable à celle d'un système d'exploitation unique ou à tout le moins très inférieure à celle d'un système d'exploitation personnalisé pour chaque noeud de calcul, tandis que la personnalisation complète du système d'exploitation peut être réalisée pour chaque noeud de calcul.

Le fait d'avoir une image identique permet un gain de place important, par exemple un seul stockage pour plusieurs centaines de machines, et une amélioration des performances en conservant la plupart des données au niveau du serveur central, plus précisément en permettant de stocker les données utiles dans le cache du serveur central après les avoir chargé du disque.

A cette fin, la présente invention propose un procédé de configuration d'un système d'exploitation sur un noeud de calcul d'un groupe de plusieurs noeuds de calcul dans un réseau comprenant aussi un serveur central, tel qu'il est décrit par la revendication 1.

A cette fin, la présente invention propose aussi un réseau comprenant : au moins un serveur central, un groupe de plusieurs noeuds de calcul, ledit serveur central et lesdits noeuds de calcul étant structurés et programmés et reliés entre eux de manière à dérouler le procédé de configuration selon l'une quelconque des revendications précédentes.

A cette fin, la présente invention propose encore, pour appliquer aux clients légers le même principe qu'aux noeuds de calcul, un procédé de configuration d'un système d'exploitation sur un client léger d'un groupe de plusieurs clients légers dans un réseau comprenant aussi un serveur central, comprenant : une transmission, d'un des clients légers dudit groupe vers le serveur central, de données d'authentification spécifiques audit client léger, une transmission, du serveur central vers ledit client léger, de données de configuration spécifiques audit client léger, un stockage, au niveau dudit client léger, desdites données de configuration spécifiques, une mise en place d'un accès, vers le serveur central par ledit client léger, à des données du système d'exploitation communes à tous les clients légers dudit groupe et stockées au niveau du serveur central, un démarrage dudit client léger sur un système exploitation qui est spécifique audit client léger et qui comprend d'une part lesdites données de configuration spécifiques stockées au niveau dudit client léger et d'autre part lesdites données du système d'exploitation communes directement accessibles au niveau du serveur central par ledit client léger tout en restant stockées au niveau du serveur central.

Un « client léger », au sens matériel, est un ordinateur qui, dans une architecture client/serveur, n'a presque pas de logique d'application et qui dépend donc surtout du serveur central pour le traitement.

Selon des modes de réalisation de l'invention, des machines partageant un même système d'exploitation ou le même système racine sont authentifiées et configurées de façon sécurisée et automatique.

Selon des modes de réalisation de l'invention, le partage d'un espace commun entre des centaines de noeuds permet d'économiser de l'espace et de gagner en performance en plaçant au départ toutes les données communes dans le serveur central, et préférentiellement dans le cache du serveur central.

Selon des modes de réalisation de l'invention, la combinaison d'un certificat embarqué et d'une authentification sur le serveur central avec un fichier de personnalisation sécurisé des machines ou des noeuds de calcul permet de configurer tout le réseau au démarrage des noeuds de calcul sans avoir de stockage local au niveau des noeuds de calcul.

Selon des modes de réalisation de l'invention, les machines ou les noeuds de calcul démarrent sur un système racine personnalisé directement, sans faire de requêtes supplémentaires au serveur central, alors qu'elles partagent ce même système racine, grâce à la modification en mémoire locale de leur configuration.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un quelconque des objets précités de l'invention.

De préférence, lesdites données de configuration spécifiques sont stockées dans une mémoire vive dudit noeud de calcul. Ainsi, soit le noeud de calcul n'a pas besoin d'avoir de mémoire non volatile, soit sa mémoire non volatile peut être dédiée à effectuer une autre tâche, comme une tâche de stockage des résultats de calcul. La faible quantité de données stockées localement, c'est-à-dire les données de configuration spécifiques, permet de les stocker dans la mémoire vive du noeud de calcul sans perturber son fonctionnement.

De préférence, ledit noeud de calcul ne comprend pas de mémoire non volatile permettant d'y écrire des données à stocker. Ce qui entraîne une simplification importante et une fiabilité accrue du noeud de calcul.

De préférence, lors dudit démarrage et/ou après ledit démarrage, en cas de besoin particulier, pour ledit noeud de calcul les données de configuration spécifiques correspondant à ce besoin particulier prévalent sur les données du système d'exploitation communes correspondant à ce besoin particulier lorsque lesdites données de configuration spécifiques existent. Lorsque pour un besoin particulier coexistent deux données concurrentes, l'une parmi les données du système d'exploitation communes et l'autre parmi les données de configuration spécifiques, le noeud de calcul ne considère que la donnée de configuration spécifique correspondante qui masque ou écrase la donnée du système d'exploitation commune correspondante.

De préférence, lors dudit démarrage et/ou après ledit démarrage, en cas de besoin particulier, ledit noeud de calcul, d'abord lit localement les données de configuration spécifiques correspondant à ce besoin particulier lorsque lesdites données de configuration spécifiques existent, ensuite accède au serveur central pour y lire les données du système d'exploitation communes correspondant à ce besoin particulier lorsque lesdites données de configuration spécifiques n'existent pas.

De préférence, lors dudit démarrage et/ou après ledit démarrage, en cas de besoin particulier, ledit noeud de calcul, enfin stocke localement temporairement lesdites données du système d'exploitation communes lues. Seules sont stockées, tant qu'il n'y a pas de besoin de place dans la mémoire locale, les données du système d'exploitation communes qui ont été lues, les données du système d'exploitation communes qui ont été lues étant également stockées au niveau du serveur central ainsi que les autres données du système d'exploitation communes. Ces données du système d'exploitation communes qui ont été lues peuvent être effacées de la mémoire du noeud de calcul en cas de besoin de mémoire, ne sont stockées que temporairement, et ne constituent qu'une minorité de l'ensemble des données du système d'exploitation communes.

De préférence, les noeuds de calcul n'ont en moyenne pas besoin de lire plus de 20% des données du système d'exploitation communes lors de leur démarrage, de préférence pas besoin d'en lire plus de 10%, encore plus de préférence pas besoin d'en lire plus de 5%. Cette faible proportion des données du système d'exploitation communes requise par chacun des noeuds rend le procédé de configuration selon l'invention particulièrement intéressant, car la place requise en mémoire locale dans les noeuds de calcul est alors relativement faible.

De préférence, ledit procédé de configuration est déroulé à chaque nouvelle mise sous tension dudit noeud de calcul. Ainsi, à chaque nouvelle mise sous tension, le noeud de calcul va pouvoir démarrer de manière certaine d'un état stable et maîtrisé.

De préférence, ledit procédé de configuration est déroulé à chaque nouvelle tâche démarrée par ledit noeud de calcul. Ainsi, à chaque nouvelle tâche démarrée par ledit noeud de calcul, le noeud de calcul va pouvoir démarrer de manière certaine d'un état stable et maîtrisé.

De préférence, les données de configuration spécifiques comprennent aussi des données supplémentaires d'authentification qui permettent au noeud de calcul de s'authentifier dans le réseau auprès de chaque service du réseau que ledit noeud de calcul a besoin d'utiliser, de préférence sous la forme d'une clé d'authentification distincte par service. Ces données supplémentaires d'authentification sont inclues dans les données de configuration spécifiques qui sont l'essentiel des données personnalisées dont le noeud de calcul a besoin pour démarrer sur son système d'exploitation.

Il est utile de pouvoir identifier les machines ou les noeuds de calcul sur le réseau pour pouvoir leur soumettre les applications des utilisateurs. Les identifiants habituellement utilisés sont les adresses MAC (« Media Access Control » en langue anglaise) ou IP (« Internet Protocol » en langue anglaise), mais celles-ci ne sont pas sûres ; en effet, on peut facilement se faire passer pour une machine ou un noeud de calcul en s'attribuant son adresse MAC ou IP. Pour éviter cet inconvénient, de préférence, les données d'authentification sont un certificat identifiant matériellement la machine constituant ledit noeud de calcul.

De préférence, le procédé de configuration comprend une transmission, du serveur central vers ledit noeud de calcul, d'un noyau de système d'exploitation et d'un système de mise en oeuvre de ce noyau de système d'exploitation. Ce sont ces quelques premières informations que le noeud de calcul a besoin d'implémenter pour ensuite commencer à aller chercher les données du système d'exploitation communes stockées sur le serveur central.

De préférence, toutes les données de configuration spécifiques et/ou toutes les données du système d'exploitation communes sont stockées dans la mémoire cache du serveur central. Ainsi, ces données sont plus rapidement accessibles par les noeuds de calcul en cas de besoin. Par ailleurs, elles peuvent y être stockées car leur volume global reste limité, en raison de l'image unique constituée par les données du système d'exploitation communes ; ce qui ne serait pas le cas si des données du système d'exploitation personnalisées pour chaque noeud de calcul devaient être stockées au niveau du serveur central.

De préférence, tous les noeuds de calcul dudit groupe sont configurés en utilisant le même serveur central. Ce qui entraîne une mutualisation encore supérieure de l'espace de stockage des données du système d'exploitation communes.

De préférence, le déroulement dudit procédé de configuration est entièrement automatique. Ce qui assure un déroulement rapide et avec moins de risque d'incident.

De préférence, ledit groupe de noeuds de calcul comprend tous les noeuds de calcul du réseau. Ainsi, la mutualisation de l'espace de stockage des données du système d'exploitation communes est maximisée.

De préférence, ledit groupe de noeuds de calcul comprend au moins 100 noeuds de calcul, de préférence au moins 1000 noeuds de calcul. Cette mutualisation de l'espace de stockage des données du système d'exploitation communes est d'autant plus intéressante que le nombre de noeuds de calcul dans le réseau est grand.

De préférence, ledit système d'exploitation est un système racine sous Unix ou sous Linux.

De préférence, lesdites données de configuration spécifiques sont stockées dans une mémoire vive (donc volatile) dudit noeud de calcul et lesdites données du système d'exploitation communes restent stockées dans une mémoire non volatile du serveur central, en étant éventuellement partiellement stockées au niveau du noeud de calcul mais sans être toutes stockées au niveau dudit noeud de calcul. De cette manière, toutes les informations utiles pour le système d'exploitation, données communes et données de configuration spécifiques, sont stockées, la structure du noeud est simple et la disponibilité de la mémoire du noeud de calcul pour les autres tâches est augmentée, et l'espace mémoire requis au niveau du serveur est limité voire minimisé. Seules les informations nécessaires et lues par le noeud de calcul, parmi les données du système d'exploitation communes, sont stockées localement au niveau du noeud de calcul après leur lecture. Le reste de ces informations, reste stocké uniquement au niveau du serveur central, lequel garde, en stockage, de toute façon l'ensemble des données du système d'exploitation communes.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de mise en oeuvre du procédé de configuration du système d'exploitation selon un mode de réalisation de l'invention.
La figure 2 représente schématiquement un exemple du système d'exploitation personnalisé obtenu selon un mode de réalisation de l'invention.

### DESCRIPTION DETAILLEE DE L'INVENTION

On emploie, sauf mention contraire, indifféremment système d'exploitation ou système racine, bien que système racine appartienne au monde Unix ou au monde Linux.

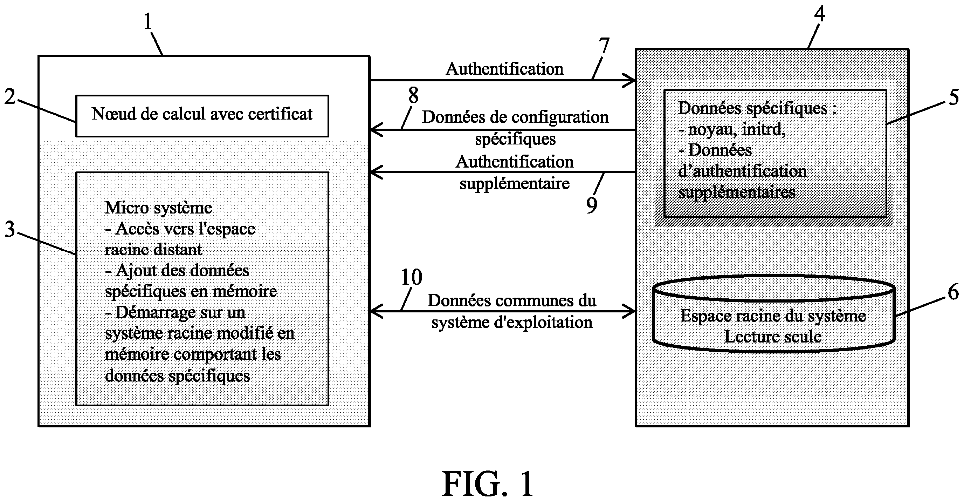

La figure 1 représente schématiquement un exemple de mise en oeuvre du procédé de configuration du système d'exploitation selon un mode de réalisation de l'invention. Un noeud de calcul 1 communique avec un serveur central 4.

Le noeud de calcul 1 ne stocke localement rien en mémoire non volatile car il n'a pas de mémoire non volatile. Un certificat d'authentification 2 est stocké dans la mémoire flash de la carte réseau. Cette mémoire flash de la carte réseau est petite et n'autorise pas le stockage d'un système complet. Le noeud de calcul 1 télécharge du serveur central au démarrage un microsystème 3 (l'initrd) dans une mémoire vive (donc volatile) qui est vide à la mise sous tension.

Le serveur central 4 stocke un jeu de données de configuration spécifiques pour l'ensemble des noeuds de calcul du groupe, incluant les données de configuration spécifiques 5 pour le noeud de calcul 1. Le serveur central 4 stocke également des données du système d'exploitation communes 6 qui sont en lecture seule.

Les données de configuration spécifiques 5 pour le noeud de calcul 1 incluent un noyau, qui est un coeur de système d'exploitation, un initrd, qui est un petit système de mise en oeuvre de ce coeur de système d'exploitation, ainsi que des données supplémentaires d'authentification, par exemple une clé d'authentification par service que le noeud de calcul 1 aura besoin d'utiliser, ainsi que d'éventuelles personnalisations à faire pour chacun des noeuds de calcul. Le noyau, comme l'initrd, peuvent également être communs à tous les noeuds, et alors faire partie de la racine commune.

Les données du système d'exploitation communes 6, qui sont en lecture seule, représentent l'ensemble des fichiers du système d'exploitation dans sa version par défaut, abstraction faite des personnalisations à faire pour chacun des noeuds de calcul lesquelles personnalisations ne se trouvent pas inclues dans la racine commune.

Le noeud de calcul 1 envoie un premier message 7 sécurisé d'authentification dans lequel il transmet au serveur central 4 son certificat d'authentification 2.

A réception de ce premier message 7 d'authentification en provenance du noeud de calcul 1, le serveur central 4 envoie dans un deuxième message d'une part les données de configuration spécifiques 8 et d'autre part les données supplémentaires d'authentification 9.

Ainsi, le noeud de calcul 1, pour démarrer son système d'exploitation, a téléchargé l'ensemble des données de configuration spécifiques 5, c'est-à-dire par exemple un fichier sécurisé contenant entre autres des données d'authentification et/ou de configuration supplémentaires. L'accès à ces ressources a été restreint par l'utilisation d'un certificat embarqué 2 sur le noeud de calcul 1 et permettant d'authentifier le noeud de calcul 1 auprès du serveur central 4 ; l'accès à ces ressources a été également sécurisé, cette communication étant sécurisée, personne ne peut la déchiffrer.

A réception de ces messages 8 et 9 en provenance du serveur central 4, le noeud de calcul 1 lance son microsystème 3 qui va effectuer trois tâches. Une première tâche est la mise en place d'un accès vers le serveur central 4, et plus précisément vers son espace racine distant, afin de pouvoir, par la communication 10, télécharger certaines des données du système d'exploitation communes 6. Une deuxième tâche est l'ajout, dans sa mémoire vive, des données de configuration spécifiques 5 reçues du serveur central 4. Une troisième tâche est le démarrage sur un système d'exploitation modifié ou sur un système racine (dans le cas Unix ou Linux) modifié, c'est-à-dire basé sur les données du système d'exploitation communes 6 personnalisés par les données de configuration spécifiques 5 incluant les données supplémentaires d'authentification.

Une fois les données de configuration spécifiques 5 récupérées par le noeud de calcul 1, le microsystème 3 a pu d'une part se connecter à l'espace partagé en lecture seule contenant les données du système d'exploitation communes 6 au niveau du serveur central 4 et d'autre part ajouter une surcouche dans sa mémoire vive (RAM pour « Random Access Memory » en langue anglaise) avec les données de configuration spécifiques 5 contenues dans le fichier sécurisé. Le microsystème 3 peut alors démarrer le système définitif avec toutes les caractéristiques souhaitées et être authentifié sur les différents services proposés par le réseau.

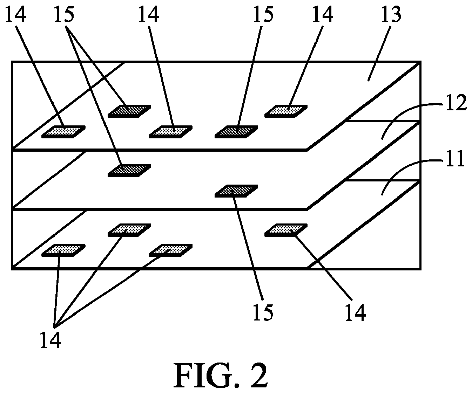

La figure 2 représente schématiquement un exemple du système d'exploitation personnalisé obtenu selon un mode de réalisation de l'invention.

La couche 11 correspond à l'ensemble des fichiers 14 du système d'exploitation par défaut, c'est-à-dire aux données du système d'exploitation communes 6. La couche 11 se trouve stockée au niveau du serveur central 4.

La couche 12 est une surcouche personnalisée correspondant aux données de configuration spécifiques 5 qui sont propres à chacun des noeuds de calcul. Ces données de configuration spécifiques 5 comprennent plusieurs fichiers 15. La couche 12 se trouve stockée au niveau du noeud de calcul 1, préférentiellement dans sa mémoire vive.

La couche 13 correspond en fait au système d'exploitation personnalisé au niveau d'un des noeuds de calcul, tel que vu par ce noeud de calcul.

Le noeud de calcul voit en priorité les fichiers 15 de la couche 12 lorsqu'ils existent, et ensuite seulement en leur absence les fichiers 14 de la couche 11. On voit l'un des fichiers 15 de la couche 12 « masquer » ou « écraser » l'un des fichiers 14 de la couche 11 (le deuxième fichier en partant de la gauche de la figure 2 sur la couche 13). Le fichier 15 masquant de la couche 12 est la personnalisation du fichier 14 masqué de la couche 11.

## Revendications

1. Procédé de configuration d'un système d'exploitation sur un noeud de calcul (1) d'un groupe de plusieurs noeuds de calcul dans un réseau comprenant aussi un serveur central (4), comprenant :
- une transmission (7), d'un (1) des noeuds de calcul dudit groupe vers le serveur central (4), de données d'authentification (2) spécifiques audit noeud de calcul (1),
- une transmission (8, 9), du serveur central (4) vers ledit noeud de calcul (1), de données de configuration spécifiques (5) audit noeud de calcul (1),
- un stockage, au niveau dudit noeud de calcul (1), desdites données de configuration spécifiques (5),
**caractérisé en ce qu'**il comprend aussi :
- une mise en place d'un accès, vers le serveur central (4) par ledit noeud de calcul (1), à des données du système d'exploitation communes (6) à tous les noeuds de calcul dudit groupe et stockées au niveau du serveur central (4),
- un démarrage dudit noeud de calcul (1) sur un système d'exploitation qui est spécifique audit noeud de calcul (1) et qui comprend d'une part lesdites données de configuration spécifiques (5) stockées au niveau dudit noeud de calcul (1) et d'autre part lesdites données du système d'exploitation communes (6) directement accessibles au niveau du serveur central (4) par ledit noeud de calcul (1) tout en restant stockées au niveau du serveur central (4).

2. Procédé de configuration selon la revendication 1, **caractérisé en ce que** lesdites données de configuration spécifiques (5) sont stockées dans une mémoire vive dudit noeud de calcul (1),
et **en ce que** de préférence ledit noeud de calcul (1) ne comprend pas de mémoire non volatile permettant d'y écrire des données à stocker.

3. Procédé de configuration selon l'une quelconque des revendications précédentes, **caractérisé en ce que**, lors dudit démarrage et/ou après ledit démarrage, en cas de besoin particulier, pour ledit noeud de calcul (1) les données de configuration spécifiques (5) correspondant à ce besoin particulier prévalent sur les données du système d'exploitation communes (6) correspondant à ce besoin particulier lorsque lesdites données de configuration spécifiques (5) existent,
de préférence **en ce que**, lors dudit démarrage et/ou après ledit démarrage, en cas de besoin particulier, ledit noeud de calcul (1), d'abord lit localement les données de configuration spécifiques (5) correspondant à ce besoin particulier lorsque lesdites données de configuration spécifiques (5) existent, ensuite accède au serveur central (4) pour y lire les données du système d'exploitation communes (6) correspondant à ce besoin particulier lorsque lesdites données de configuration spécifiques (5) n'existent pas,
et encore plus de préférence **en ce que**, lors dudit démarrage et/ou après ledit démarrage, en cas de besoin particulier, ledit noeud de calcul (1), enfin stocke localement au moins temporairement lesdites données du système d'exploitation communes (6) lues.

4. Procédé de configuration selon l'une quelconque des revendications précédentes, **caractérisé en ce que** les noeuds de calcul n'ont en moyenne pas besoin de lire plus de 20% des données du système d'exploitation communes (6) lors de leur démarrage, de préférence pas besoin d'en lire plus de 10%, encore plus de préférence pas besoin d'en lire plus de 5%.

5. Procédé de configuration selon l'une quelconque des revendications précédentes, **caractérisé en ce que** ledit procédé de configuration est déroulé à chaque nouvelle mise sous tension dudit noeud de calcul (1), et/ou **en ce que** ledit procédé de configuration est déroulé à chaque nouvelle tâche démarrée par ledit noeud de calcul (1).

6. Procédé de configuration selon l'une quelconque des revendications précédentes, **caractérisé en ce que** les données de configuration spécifiques (5) comprennent également des données supplémentaires d'authentification qui permettent au noeud de calcul (1) de s'authentifier dans le réseau auprès de chaque service du réseau que ledit noeud de calcul (1) a besoin d'utiliser, de préférence sous la forme d'une clé d'authentification distincte par service,
et/ou **en ce que** les données d'authentification (2) sont un certificat identifiant matériellement la machine constituant ledit noeud de calcul (1).

7. Procédé de configuration selon l'une quelconque des revendications précédentes, **caractérisé en ce qu'**il comprend une transmission (8), du serveur central (4) vers ledit noeud de calcul (1), d'un noyau de système d'exploitation et d'un système de mise en oeuvre de ce noyau de système d'exploitation, ledit noyau de système d'exploitation et ledit système de mise en oeuvre de ce noyau de système d'exploitation étant des données de configuration spécifiques.

8. Procédé de configuration selon l'une quelconque des revendications précédentes, **caractérisé en ce que** toutes les données de configuration spécifiques (5) et/ou toutes les données du système d'exploitation communes (6) sont stockées dans la mémoire cache du serveur central (4).

9. Procédé de configuration selon l'une quelconque des revendications précédentes, **caractérisé en ce que** tous les noeuds de calcul (1) dudit groupe sont configurés en utilisant le même serveur central (4).

10. Procédé de configuration selon l'une quelconque des revendications précédentes, **caractérisé en ce que** le déroulement dudit procédé de configuration est entièrement automatique.

11. Procédé de configuration selon l'une quelconque des revendications précédentes, **caractérisé en ce que** ledit groupe de noeuds de calcul (1) comprend tous les noeuds de calcul du réseau,
et/ou **en ce que** ledit groupe de noeuds de calcul (1) comprend au moins 100 noeuds de calcul, de préférence au moins 1000 noeuds de calcul.

12. Procédé de configuration selon l'une quelconque des revendications précédentes, **caractérisé en ce que** ledit système d'exploitation est un système racine sous Unix ou sous Linux.

13. Réseau comprenant, au moins un serveur central (4), un groupe de plusieurs noeuds de calcul (1), ledit serveur central (4) et lesdits noeuds de calcul (1) étant structurés et programmés et reliés entre eux de manière à dérouler le procédé de configuration selon l'une quelconque des revendications précédentes.

14. Procédé de configuration d'un système d'exploitation sur un client léger (1) d'un groupe de plusieurs clients légers dans un réseau comprenant aussi un serveur central (4), comprenant :
- une transmission (7), d'un (1) des clients légers dudit groupe vers le serveur central (4), de données d'authentification (2) spécifiques audit client léger (1),
- une transmission (8, 9), du serveur central (4) vers ledit client léger (1), de données de configuration spécifiques (5) audit client léger (1),
- un stockage, au niveau dudit client léger (1), desdites données de configuration spécifiques (5),
**caractérisé en ce qu'**il comprend aussi :
- une mise en place d'un accès, vers le serveur central (4) par ledit client léger (1), à des données du système d'exploitation communes (6) à tous les clients légers dudit groupe et stockées au niveau du serveur central (4),
- un démarrage dudit client léger (1) sur un système exploitation qui est spécifique audit client léger (1) et qui comprend d'une part lesdites données de configuration spécifiques (5) stockées au niveau dudit client léger (1) et d'autre part lesdites données du système d'exploitation communes (6) directement accessibles au niveau du serveur central (4) par ledit client léger (1) tout en restant stockées au niveau du serveur central (4).

## Patentansprüche

1. Verfahren zur Konfiguration eines Betriebssystems auf einem Rechenknoten (1) einer Gruppe von mehreren Rechenknoten in einem Netzwerk, welches auch einen zentralen Server (4) umfasst, umfassend:
- eine Übertragung (7) von Authentifizierungsdaten (2), die für diesen Rechenknoten (1) spezifisch sind, von einem (1) der Rechenknoten der Gruppe an den zentralen Server (4),
- eine Übertragung (8, 9) von Konfigurationsdaten (5), die für den Rechenknoten (1) spezifisch sind, vom zentralen Server (4) zum Rechenknoten (1),
- eine Speicherung der spezifischen Konfigurationsdaten (5) in dem Rechenknoten (1),
**dadurch gekennzeichnet, dass** es auch Folgendes umfasst:
- Einrichten eines Zugriffs auf Betriebssystemdaten (6), die allen Rechenknoten der Gruppe gemeinsam sind und auf dem zentralen Server (4) gespeichert werden, auf den zentralen Server (4) durch den Rechenknoten (1),
- Starten des Rechenknotens (1) auf einem Betriebssystem, das für den Rechenknoten (1) spezifisch ist und das einerseits die spezifischen Konfigurationsdaten (5) umfasst, die auf dem Rechenknoten (1) gespeichert sind, und andererseits die gemeinsamen Betriebssystemdaten (6) umfasst, auf die durch den Rechenknoten (1) direkt auf dem zentralen Server (4) zugegriffen werden kann, wobei sie auf dem zentralen Server (4) gespeichert bleiben.

2. Konfigurationsverfahren nach Anspruch 1, **dadurch gekennzeichnet, dass** die spezifischen Konfigurationsdaten (5) in einem RAM-Speicher des Rechenknotens (1) gespeichert werden, und dass der Rechenknoten (1) bevorzugt keinen nichtflüchtigen Speicher enthält, in den zu speichernde Daten geschrieben werden können.

3. Konfigurationsverfahren nach einem der vorhergehenden Ansprüche, **dadurch gekennzeichnet, dass** bei dem genannten Start und/oder nach dem genannten Start im Falle eines besonderen Bedarfs, für den Rechenknoten (1) die spezifischen Konfigurationsdaten (5), die diesem besonderen Bedarf entsprechen, Vorrang vor den gemeinsamen Betriebssystemdaten (6) haben, die diesem besonderen Bedarf entsprechen, wenn die spezifischen Konfigurationsdaten (5) vorliegen, bevorzugt dadurch, dass der Rechenknoten (1) beim Start und/oder nach dem Start, im Falle eines besonderer Bedarfs, zuerst lokal die spezifischen Konfigurationsdaten (5) liest, die diesem besonderen Bedarf entsprechen, wenn die spezifischen Konfigurationsdaten (5) vorliegen, und dann auf den zentralen Server (4) zugreift, um dort die gemeinsamen Betriebssystemdaten (6) zu lesen, die diesem besonderen Bedarf entsprechen, wenn die spezifischen Konfigurationsdaten (5) nicht vorliegen,
und stärker bevorzugt dadurch, dass der Rechenknoten (1) beim Start und/oder nach dem Start im Falle eines besonderen Bedarfs die gelesenen Daten des gemeinsamen Betriebssystems (6) wenigstens vorübergehend lokal speichert.

4. Konfigurationsverfahren nach einem der vorhergehenden Ansprüche, **dadurch gekennzeichnet, dass** die Rechenknoten bei ihrem Start im Durchschnitt nicht mehr als 20 % der gemeinsamen Betriebssystemdaten (6) lesen müssen, bevorzugt nicht mehr als 10 %, stärker bevorzugt nicht mehr als 5 % lesen müssen.

5. Konfigurationsverfahren nach einem der vorhergehenden Ansprüche, **dadurch gekennzeichnet, dass** das Konfigurationsverfahren bei jedem neuen Anlegen von Spannung an den Rechenknoten (1) durchgeführt wird und/oder dass das Konfigurationsverfahren bei jedem neuen Auftrag durchgeführt wird, der von dem Rechenknoten (1) gestartet wird.

6. Konfigurationsverfahren nach einem der vorhergehenden Ansprüche, **dadurch gekennzeichnet, dass** die spezifischen Konfigurationsdaten (5) auch zusätzliche Authentifizierungsdaten umfassen, die es dem Rechenknoten (1) ermöglichen, sich im Netzwerk bei jedem Netzwerkdienst zu authentifizieren, den der Rechenknoten (1) nutzen muss, bevorzugt in Form eines für jeden Dienst spezifischen Authentifizierungsschlüssels,
und/oder dass die Authentifizierungsdaten (2) ein Zertifikat sind, das die Maschine, die den Rechenknoten (1) bildet, materiell identifiziert.

7. Konfigurationsverfahren nach einem der vorhergehenden Ansprüche, **dadurch gekennzeichnet, dass** es eine Übertragung (8) eines Betriebssystemkerns und eines Implementierungssystems dieses Betriebssystemkerns vom zentralen Server (4) zum Rechenknoten (1) umfasst, wobei der Betriebssystemkern und das Implementierungssystem dieses Betriebssystemkerns spezifische Konfigurationsdaten sind.

8. Konfigurationsverfahren nach einem der vorhergehenden Ansprüche, **dadurch gekennzeichnet, dass** alle spezifischen Konfigurationsdaten (5) und/oder alle gemeinsamen Betriebssystemdaten (6) im Cache-Speicher des zentralen Servers (4) gespeichert werden.

9. Konfigurationsverfahren nach einem der vorhergehenden Ansprüche, **dadurch gekennzeichnet, dass** alle Rechenknoten (1) der Gruppe unter Verwendung desselben zentralen Servers (4) konfiguriert werden.

10. Konfigurationsverfahren nach einem der vorhergehenden Ansprüche, **dadurch gekennzeichnet, dass** der Ablauf des Konfigurationsverfahrens vollautomatisch ist.

11. Konfigurationsverfahren nach einem der vorhergehenden Ansprüche, **dadurch gekennzeichnet, dass** die Gruppe der Rechenknoten (1) alle Rechenknoten des Netzwerks umfasst
und/oder dass die Gruppe der Rechenknoten (1) wenigstens 100 Rechenknoten, bevorzugt wenigstens 1000 Rechenknoten, umfasst.

12. Konfigurationsverfahren nach einem der vorhergehenden Ansprüche, **dadurch gekennzeichnet, dass** das Betriebssystem ein Root-System unter Unix oder Linux ist.

13. Netzwerk, umfassend wenigstens einen zentralen Server (4) und eine Gruppe von mehreren Rechenknoten (1), wobei der zentrale Server (4) und die Rechenknoten (1) derart aufgebaut, programmiert und miteinander verbunden sind, dass sie den Konfigurationsprozess nach einem der vorhergehenden Ansprüche durchführen können.

14. Verfahren zur Konfiguration eines Betriebssystems auf einem Thin-Client (1) einer Gruppe von mehreren Thin-Clients in einem Netzwerk, das auch einen zentralen Server (4) umfasst, wobei das Verfahren Folgendes umfasst:
- eine Übertragung (7) von Authentifizierungsdaten (2), die für diesen Thin-Client (1) spezifisch sind, von einem der Thin-Clients (1) der Gruppe an den zentralen Server (4),
- eine Übertragung (8, 9) von Konfigurationsdaten (5), die für den Thin-Client (1) spezifisch sind, vom zentralen Server (4) an den Thin-Client (1),
- eine Speicherung der spezifischen Konfigurationsdaten (5) in dem Thin-Client (1),
**dadurch gekennzeichnet, dass** es auch Folgendes umfasst:
- Einrichten eines Zugriffs auf den zentralen Server (4) durch den Thin-Client (1) auf Betriebssystemdaten (6), die allen Thin-Clients der Gruppe gemeinsam sind und die auf dem zentralen Server (4) gespeichert werden,
- einen Start des Thin-Clients (1) auf einem Betriebssystem, das für den Thin-Client (1) spezifisch ist und das einerseits die spezifischen Konfigurationsdaten (5) umfasst, die in dem Thin-Client (1) gespeichert werden, und andererseits die gemeinsamen Betriebssystemdaten (6) umfasst, die auf dem zentralen Server (4) für den Thin-Client (1) direkt zugänglich sind, wobei sie auf dem zentralen Server (4) gespeichert bleiben.

## Claims

1. Method for configuring an operating system on a computing node (1) in a group of a plurality of computing nodes in a network also comprising a central server (4), comprising:
- a transmission (7), from one (1) of the computing nodes in said group to the central server (4), of authentication data (2) specific to said computing node (1),
- a transmission (8, 9), from the central server (4) to said computing node (1), of configuration data (5) specific to said computing node (1),
- a storage, at said computing node (1), of said specific configuration data (5),
**characterised in that** it also comprises:
- an establishment of an access, to the central server (4) by said computing node (1), to data (6) of the operating system common to all the computing nodes in said group and stored at the central server (4),
- a starting up of said computing node (1) on an operating system that is specific to said computing node (1) and that comprises firstly said specific configuration data (5) stored at said computing node (1) and secondly said common data (6) of the operating system directly accessible at the central server (4) to said computing node (1) while remaining stored at the central server (4).

2. Configuration method according to claim 1, **characterised in that** said specific configuration data (5) are stored in a random access memory of said computing node (1),
and **in that** preferably said computing node (1) does not comprise any non-volatile memory making it possible to write therein data to be stored.

3. Configuration method according to any one of the preceding claims, **characterised in that**, during said start-up and/or after said start-up, in the case of a particular need for said computing node (1), the specific configuration data (5) corresponding to this particular need have precedence over the common data (6) of the operating system corresponding to this particular need when said specific configuration data (5) exist, preferably **in that**, during said start-up and/or after said start-up, in the case of any particular need, said computing node (1) first locally reads the specific configuration data (5) corresponding to this particular need when said specific configuration data (5) exist, and next accesses the central server (4) to read therein the common data (6) of the operating system corresponding to this particular need when said specific configuration data (5) do not exist,
and even more preferably **in that**, during said start-up and/or after said start-up, in the case of a particular need, said computing node (1) finally locally stores at least temporarily said common data (6) of the operating system read.

4. Configuration method according to any one of the preceding claims, **characterised in that** the computing nodes on average do not need to read more than 20% of the common data (6) of the operating system during start-up thereof, preferably do not need to read more than 10% thereof, even more preferably do not need to read more than 5% thereof.

5. Configuration method according to any one of the preceding claims, **characterised in that** said configuration method is implemented at each new powering up of said computing node (1),
and/or **in that** said configuration method is implemented at each new task started by said computing node (1).

6. Configuration method according to any one of the preceding claims, **characterised in that** the specific configuration data (5) also comprise supplementary authentication data that enable the computing node (1) to authenticate itself in the network with each service of the network that said computing node (1) needs to use, preferably in the form of a distinct authentication key per service,
and/or **in that** the authentication data (2) are a certificate physically identifying the machine constituting said computing node (1).

7. Configuration method according to any one of the preceding claims, **characterised in that** it comprises a transmission (8), from the central server (4) to said computing node (1), of an operating-system kernel and of a system using this operating-system kernel, said operating-system kernel and said system using this operating-system kernel being specific configuration data.

8. Configuration method according to any one of the preceding claims, **characterised in that** all the specific configuration data (5) and/or all the common data (6) of the operating system are stored in the cache memory of the central server (4).

9. Configuration method according to any one of the preceding claims, **characterised in that** all the computing nodes (1) in said group are configured using the same central server (4).

10. Configuration method according to any one of the preceding claims, **characterised in that** the implementation of said configuration method is completely automatic.

11. Configuration method according to any one of the preceding claims, **characterised in that** said group of computing nodes (1) comprises all the computing nodes in the network,
and/or **in that** said computing nodes (1) comprises at least 100 computing nodes, preferably at least 1000 computing nodes.

12. Configuration method according to any one of the preceding claims, **characterised in that** said operating system is a root system under Unix or under Linux.

13. Network comprising at least one central server (4) and a group of a plurality of computing nodes (1), said central server (4) and said computing nodes (1) being structured and programmed and connected together so as to implement the configuration method according to any one of the preceding claims.

14. Method for configuring an operating system on a thin client (1) in a group of a plurality of thin clients in a network also comprising a central server (4), comprising:
- a transmission (7), from one (1) of the thin clients in said group to the central server (4), of authentication data (2) specific to said thin client (1),
- a transmission (8, 9), from the central server (4) to said thin client (1), of configuration data (5) specific to said thin client (1),
- a storage, at said thin client (1), of said specific configuration data (5),
**characterised in that** it also comprises:
- an establishment of an access, to the central server (4) by said thin client (1), to data (6) of the operating system common to all the thin clients in said group and stored at the central server (4),
- a starting up of said thin client (1) on an operating system that is specific to said thin client (1) and that comprises firstly said specific configuration data (5) stored at said thin client (1) and secondly said common data (6) of the operating system directly accessible at the central server (4) to said thin client (1) while remaining stored at the central server (4).
